# FASCICULE DE BREVET EUROPEEN

(11) **EP 4 183 130 B1**
(45) Date de publication et mention de la délivrance du brevet: **22.04.2026**
(21) Numéro de dépôt: 21745308.3
(22) Date de dépôt: 13.07.2021
(51) Int. Cl.: H04N 19/103, H04N 19/164, H04N 19/179, H04N 19/46, H04N 19/463, H04N 19/89

(54) **DECODAGE VIDEO UTILISANT UN RESEAU DE NEURONES**
VIDEODEKODIERUNG MITTELS NEURONALER NETZWERKE
VIDEO DECODING USING A NEURAL NETWORK

(30) Priorité: 17.07.2020 FR 2007529
(43) Date de publication de la demande: 24.05.2023
(73) Titulaire: Orange, 92130 Issy-les-Moulineaux (FR)
(72) Inventeur: HENRY, Félix, 35760 SAINT-GRÉGOIRE (FR); CLARE, Gordon, 35740 PACÉ (FR)
(86) Numéro de dépôt international: PCT/EP2021/069519
(87) Numéro de publication internationale: WO 2022/013249

(56) Documents cités:
- WO-A1-2017/036370
- WO-A1-2019/045883
- WO-A1-2019/205871
- WIEDEMANN SIMON ET AL: "Compact and Computationally Efficient Representation of Deep Neural Networks", IEEE TRANSACTIONS ON NEURAL NETWORKS AND LEARNING SYSTEMS, IEEE, PISCATAWAY, NJ, USA, vol. 31, no. 3, 29 May 2019 (2019-05-29), pages 772 - 785, XP011775223, ISSN: 2162-237X, [retrieved on 20200227], DOI: 10.1109/TNNLS.2019.2910073

## Description

### Domaine technique de l'invention

La présente invention concerne le domaine technique du décodage de contenus audiovisuels.

Elle concerne en particulier un procédé de décodage d'un flux de données, ainsi qu'un dispositif et un flux de données associés.

### Etat de la technique

Il a été proposé de compresser des données représentatives d'un contenu vidéo au moyen d'un réseau de neurones artificiels. Le décodage des données compressées peut alors s'effectuer au moyen d'un autre réseau de neurones artificiels, comme décrit par exemple dans l'article *"*DVC : An End-to-end Deep Video Compression Framework", de Guo Lu et al., 2019 IEEE/CVF Conference on Computer Vision and Pattern Recognition (CVPR), Long Beach, CA, USA, 2019, pp. 10998-11007.

Des autres documents appartenants à l'état de l'art divulguent l'idée d'indiquer le réseau de neurones à utiliser pour le décodage (a) au moyen d'un indicateur identifiant le réseau dans un ensemble de réseaux candidats prédéfinis, ou bien (b) en transmettant les paramètres nécessaires à décrire le réseau à utiliser:
- WO 2019/045883 A1 (APPLE INC [US]), 7 mars 2019,
- WO 2017/036370 A1 (MEDIATEK INC [CN]), 9 mars 2017.

Les passages les plus relevants sont le paragraphe 94 du premier document et les paragraphes 32-34 du deuxième document.

Au paragraphe 33 le deuxième document divulgue une troisième option, c'est à dire (c) une décision / sélection implicite par le décodeur. Les deux documents présentent toutefois les alternatives (a) et (b) - et aussi (c) - comme des réalisations différentes.

### Présentation de l'invention

Dans ce contexte, la présente invention propose un procédé de décodage d'un flux de données comprenant un indicateur et des données représentatives d'un contenu audio ou vidéo, dans lequel le procédé comprend les étapes suivantes :
- décodage de l'indicateur pour déterminer si un réseau de neurones artificiels à utiliser pour le décodage desdites données représentatives est codé dans le flux de données ou fait partie d'un ensemble prédéterminé de réseaux de neurones artificiels ;
- décodage desdites données représentatives au moyen du réseau de neurones artificiels.

Un tel indicateur permet ainsi au décodeur de connaître la méthode par laquelle il pourra avoir accès au réseau de neurones artificiels à utiliser pour le décodage des données représentatives du contenu.

Ce procédé de décodage peut comprendre, s'il est déterminé par décodage de l'indicateur que le réseau de neurones artificiels fait partie dudit ensemble prédéterminé, le décodage d'un identifiant du réseau de neurones.

L'invention propose également, de manière originale en soi, un procédé de décodage d'un flux de données comprenant des données représentatives d'un contenu audio ou vidéo, et un identifiant désignant un réseau de neurones artificiels parmi un ensemble prédéterminé de réseaux de neurones artificiels, dans lequel le procédé comprend les étapes suivantes :
- décodage de l'identifiant ;
- décodage desdites données représentatives au moyen du réseau de neurones artificiels désigné par l'identifiant décodé.

Le décodage de l'identifiant indique ainsi quel réseau de neurones artificiels doit être utilisé parmi un ensemble prédéterminé de réseaux de neurones artificiels, par exemple un ensemble prédéterminé de neurones artificiels auxquels le dispositif électronique de décodage a accès, comme expliqué dans la suite.

Selon une première possibilité, le procédé de décodage peut comprendre la lecture, dans une unité de mémorisation, de paramètres du réseau de neurones artificiels identifié par l'identifiant décodé.

On peut prévoir que cette unité de mémorisation mémorise un premier jeu de paramètres représentatifs d'un premier réseau de neurones artificiels formant un décodeur à accès aléatoire et/ou un second jeu de paramètres représentatifs d'un second réseau de neurones artificiels formant un décodeur à faible latence.

Le procédé de décodage peut comprendre par ailleurs une étape de génération d'un message d'erreur en cas d'absence (par exemple au sein d'une unité de mémorisation telle que l'unité de mémorisation précitée) de données relatives au réseau de neurones artificiels identifié par l'identifiant décodé.

Selon une seconde possibilité, le procédé de décodage peut comprendre la réception, en provenance d'un serveur distant, de paramètres du réseau de neurones artificiels identifié par l'identifiant décodé.

Le procédé de décodage peut par ailleurs comprendre, s'il est déterminé par décodage de l'indicateur que le réseau de neurones artificiels est codé dans le flux de données, le décodage de données de codage du réseau de neurones artificiels comprises dans le flux de données afin d'obtenir des paramètres du réseau de neurones artificiels.

Selon une possibilité de réalisation, le procédé de décodage peut comprendre une étape (préalable) de transmission d'une liste de réseaux de neurones artificiels à destination d'un dispositif de commande de l'émission du flux de données. Dans certains modes de réalisation, cette liste de réseaux de neurones artificiels peut correspondre à l'ensemble prédéterminé susmentionné. Autrement dit, dans ce cas, l'ensemble prédéterminé de réseaux de neurones artificiels peut comprendre (ou être formé par) les réseaux de neurones artificiels de cette liste.

Le contenu peut être en pratique une première partie d'une séquence vidéo, cette séquence vidéo pouvant alors comprendre ladite première partie et une seconde partie.

Dans ce cas, l'étape de décodage desdites données représentatives produisant ladite première partie, le procédé peut comprendre en outre une étape de décodage d'autres données au moyen d'un autre réseau de neurones artificiels pour produire la seconde partie.

Selon une possibilité de réalisation, l'autre réseau de neurones artificiels présente une structure identique audit réseau de neurones artificiels, ce qui simplifie la mise à jour du réseau de neurones artificiels au sein du dispositif électronique de décodage.

La première partie et la seconde partie susmentionnée forment respectivement par exemple deux groupes d'images pour le format de représentation du contenu utilisé.

L'invention propose également un dispositif de décodage comprenant :
- une unité de réception d'un flux de données comprenant un indicateur et des données représentatives d'un contenu audio ou vidéo ;
- un ensemble de décodage conçu pour déterminer, par décodage de l'indicateur, si un réseau de neurones artificiels à utiliser pour le décodage desdites données représentatives fait partie d'un ensemble prédéterminé de réseaux de neurones artificiels ou est codé dans le flux de données, et pour décoder lesdites données représentatives au moyen du réseau de neurones artificiels.

L'invention propose en outre un dispositif de décodage comprenant :
- une unité de réception d'un flux de données comprenant des données représentatives d'un contenu audio ou vidéo, et un identifiant désignant un réseau de neurones artificiels parmi un ensemble prédéterminé de réseaux de neurones artificiels ;
- un ensemble de décodage conçu pour décoder l'identifiant, et pour décoder lesdites données représentatives au moyen du réseau de neurones artificiels désigné par l'identifiant décodé.

Dans les modes de réalisation décrits dans la suite, un tel ensemble de décodage comprend un processeur conçu ou programmé pour décodage l'indicateur et/ou l'identifiant, et/ou une unité de traitement parallélisé conçue pour effectuer en parallèle à un instant donné une pluralité d'opérations du même type et pour mettre en œuvre le réseau de neurones artificiels précité pour décoder les données représentatives susmentionnées.

L'invention propose également un flux de données comprenant des données représentatives d'un contenu audio ou vidéo, et un indicateur indiquant si un réseau de neurones artificiels à utiliser pour le décodage desdites données représentatives est codé dans le flux de données ou fait partie d'un ensemble prédéterminé de réseaux de neurones artificiels.

Enfin, l'invention propose un flux de données comprenant des données représentatives d'un contenu audio ou vidéo, et un identifiant désignant, parmi un ensemble prédéterminé de réseaux de neurones artificiels, un réseau de neurones artificiels à utiliser pour le décodage desdites données représentatives

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
- la figure 1 représente un dispositif électronique de codage utilisé dans le cadre de l'invention ;
- la figure 2 est un logigramme représentant des étapes d'un procédé de codage mis en œuvre au sein du dispositif électronique de codage de la figure 1 ;
- la figure 3 est un premier exemple de flux de données obtenu par le procédé de la figure 2 ;
- la figure 4 est un second exemple de flux de données obtenu par le procédé de la figure 2 ;
- la figure 5 est un troisième exemple de flux de données obtenu par le procédé de la figure 2 ;
- la figure 6 est un quatrième exemple de flux de données obtenu par le procédé de la figure 2 ;
- la figure 7 représente un dispositif électronique de codage selon un mode de réalisation de l'invention ; et
- la figure 8 est un logigramme représentant des étapes d'un procédé de décodage mis en œuvre au sein du dispositif électronique de décodage de la figure 7.

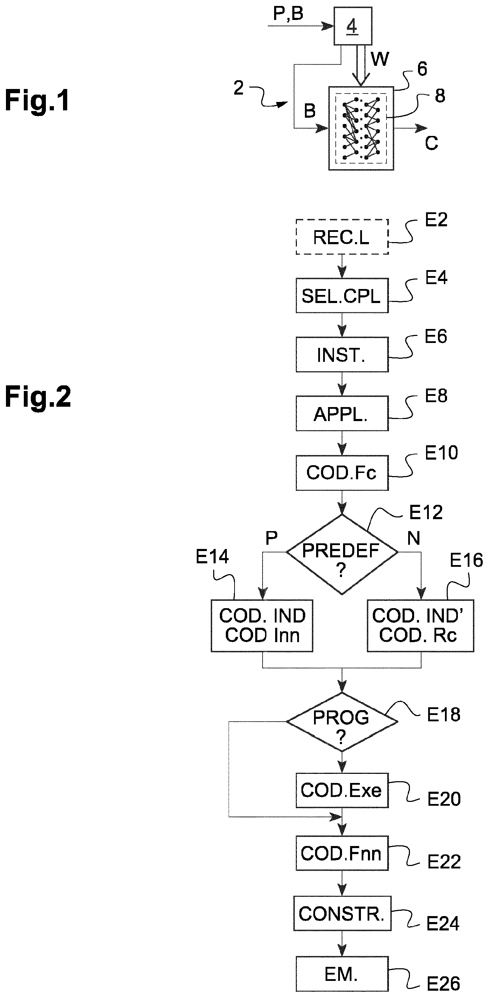

La figure 1 représente un dispositif électronique de codage 2 utilisant au moins un réseau de neurones artificiels 8.

Ce dispositif électronique de codage 2 comprend un processeur 4 (par exemple un microprocesseur) et une unité de traitement parallélisé 6, par exemple une unité de traitement graphique (ou GPU pour *"Graphical Processing Unit*") ou une unité de traitement de tenseur (ou TPU pour *"Tensor Processing Unit*")*.*

Comme schématiquement représenté en figure 1, le processeur 4 reçoit des données P, B représentant un contenu audio ou vidéo à compresser, ici des données de format P et des données de contenu B.

Les données de format P indiquent des caractéristiques du format de représentation du contenu audio ou vidéo, par exemple pour un contenu vidéo les dimensions (en pixels) des images, la fréquence d'image, la profondeur en bits des informations de luminance et la profondeur en bits des informations de chrominance.

Les données de contenu B forment une représentation (ici non compressée) du contenu audio ou vidéo. Par exemple, dans le cas d'un contenu vidéo, les données de contenu comprennent, pour chaque pixel de chaque image d'une séquence d'images, des données représentant une valeur de luminance du pixel et des données représentant des valeurs de chrominance du pixel.

L'unité de traitement parallélisé 6 est conçue pour mettre en œuvre un réseau de neurones artificiels 8 après avoir été configurée par le processeur 4. Pour ce faire, l'unité de traitement parallélisé est conçue pour effectuer en parallèle à un instant donné une pluralité d'opérations du même type.

Comme expliqué dans la suite, le réseau de neurones artificiels 8 est utilisé dans le cadre d'un traitement des données de contenu B visant à obtenir des données compressées C.

Dans le mode de réalisation décrit ici, lorsque les données de contenu B sont appliquées en entrée du réseau de neurones artificiels 8, le réseau de neurones artificiels 8 produit en sortie les données compressées C.

Les données de contenu B appliquées en entrée du réseau de neurones artificiels 8 (c'est-à-dire appliquées à une couche d'entrée du réseau de neurones artificiels 8) peuvent représenter un bloc d'une image, ou un bloc d'une composante d'une image (par exemple un bloc d'une composante de luminance ou de chrominance de cette image, ou un bloc d'une composante de couleur de cette image), ou une image d'une séquence vidéo, ou une composante d'une image d'une séquence vidéo (par exemple une composante de luminance ou de chrominance, ou une composant de couleur), ou encore une série d'images de la séquence vidéo.

On peut prévoir par exemple dans ce cas que certains au moins des neurones de la couche d'entrée reçoivent chacun une valeur de pixel d'une composante d'une image, valeur représentée par l'une des données de contenu B.

En variante, le traitement des données de contenu B peut comprendre l'utilisation de plusieurs réseaux de neurones artificiels, comme décrit par exemple dans l'article précité *"*DVC : An End-to-end Deep Video Compression Framework", de Guo Lu et al., 2019 IEEE/CVF Conference on Computer Vision and Pattern Recognition (CVPR), juin 2019.

On décrit à présent en référence à la figure 2 un exemple de procédé de codage mis en œuvre par le dispositif électronique de codage 2.

Une mémoire liée au processeur 4 mémorise par exemple des instructions de programme d'ordinateur conçues pour la mise en œuvre d'une partie au moins des étapes du procédé de la figure 2 lorsque ces instructions sont exécutées par le processeur 4. Autrement dit, le processeur 4 est programmé pour mettre en œuvre une partie au moins des étapes de la figure 2.

Le procédé de la figure 2 débute ici par une étape optionnelle E2 de réception d'une liste de réseaux de neurones artificiels accessibles par un dispositif électronique de décodage.

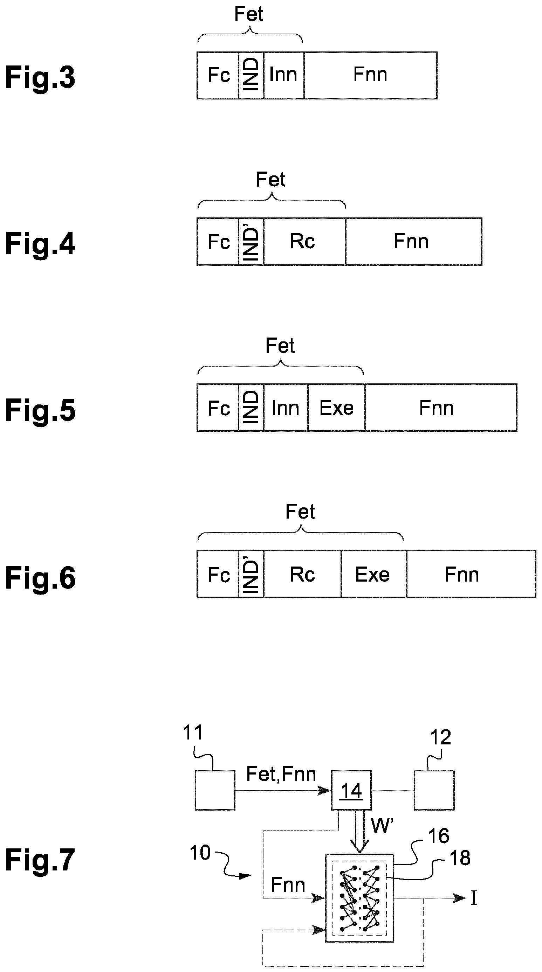

La liste est par exemple reçue par le processeur 4 du dispositif électronique de codage 2 directement en provenance d'un dispositif électronique de décodage (conforme par exemple au dispositif électronique de décodage 10 de la figure 7 décrit plus loin).

Comme expliqué ci-dessous, les réseaux de neurones artificiels accessibles par le dispositif électronique de décodage sont des réseaux de neurones artificiels pour lesquels le dispositif électronique de décodage mémorise des paramètres définissant le réseau de neurones artificiels concerné ou peut avoir accès à ces paramètres par connexion à un équipement électronique distant tel qu'un serveur.

En variante, la liste pourrait être reçue par le processeur 4 du dispositif électronique 2 en provenance d'un serveur distant, tel que le serveur précité.

Le procédé de la figure 2 se poursuit par une étape E4 de sélection d'un couple processus de codage - processus de décodage. Comme déjà indiqué pour le processus de codage, le processus de codage et le processus de décodage utilisent chacun au moins un réseau de neurones artificiels.

Dans l'exemple décrit ici, le processus de codage est mis en œuvre par un réseau de neurones artificiels de codage et le processus de décodage est mis en œuvre par un réseau de neurones artificiels de décodage.

L'ensemble formé par le réseau de neurones artificiels de codage et par le réseau de neurones artificiels de décodage (la sortie du réseau de neurones artificiels de codage étant appliquée à l'entrée du réseau de neurones artificiels de décodage) constitue par exemple un auto-encodeur.

Le couple processus de codage - processus de décodage est par exemple sélectionné parmi une pluralité de couples processus de codage - processus de décodage prédéfinis, c'est-à-dire ici parmi une pluralité de couples réseau de neurones artificiels de codage - réseau de de neurones artificiels de décodage.

Lorsqu'une liste de réseaux de neurones artificiels accessibles par un dispositif électronique de décodage est préalablement reçue (comme expliqué ci-dessus à l'étape E2), le couple processus de codage - processus de décodage est par exemple sélectionné parmi des couples processus de codage - processus de décodage pour lesquels le processus de décodage utilise un réseau de neurones artificiels présent dans la liste reçue.

Le couple processus de codage - processus de décodage peut également être sélectionné en fonction de l'application visée (indiquée par exemple par un utilisateur au moyen d'une interface utilisateur non représentée du dispositif électronique de codage 2). Par exemple, si l'application visée est une visioconférence, le couple processus de codage - processus de décodage sélectionné comprend un processus de décodage à faible latence. Dans d'autres applications, le couple processus de codage - processus de décodage sélectionné comprendra un processus de décodage à accès aléatoire.

Dans un processus de décodage à faible latence d'une séquence vidéo, une image de la séquence vidéo est par exemple représentée par des données codées qui peuvent être envoyées et décodées immédiatement ; les données peuvent alors être envoyées dans l'ordre d'affichage des images de la vidéo, ce qui garantit dans ce cas une latence d'une image entre le codage et le décodage.

Dans un processus de décodage à accès aléatoire d'une séquence vidéo, les données codées relatives respectivement à une pluralité d'images sont envoyées dans un ordre différent de l'ordre d'affichage de ces images, ce qui permet d'augmenter la compression. Des images codées sans référence aux autres images (images dites *intra*) peuvent alors être codées régulièrement, ce qui permet de démarrer le décodage de la séquence vidéo depuis plusieurs endroits dans le flux codé.

On pourra se référer à ce sujet à l'article *"*Overview of the High Efficiency Video Coding (HEVC) Standard", de G. J. Sullivan, J.-R. Ohm, W.-J. Han and T. Wiegand, in IEEE Transactions on Circuits and Systems for Video Technology, vol. 22, no. 12, pp. 1649-1668, déc. 2012.

Le couple processus de codage - processus de décodage peut également être sélectionné afin d'obtenir le meilleur compromis compression-distorsion possible.

Pour ce faire, on peut appliquer aux données de contenu B une pluralité d'ensembles processus de codage - processus de décodage et sélectionner l'ensemble pour lequel le meilleur compromis compression-distorsion est atteint.

En variante, on peut déterminer le type de contenu (par exemple par analyse des données de contenu B) et sélectionner le couple processus de codage - processus de décodage en fonction du type déterminé.

Le couple processus de codage - processus de décodage peut également être sélectionné en fonction de la puissance de calcul disponible au niveau du dispositif électronique de décodage. Une information représentative de cette puissance de calcul peut au préalable avoir été transmise du dispositif électronique de décodage au dispositif électronique de codage (et reçue par exemple par le dispositif électronique de codage à l'étape E2 décrite ci-dessus).

Les différents critères de sélection du couple processus de codage - processus de décodage peuvent éventuellement être combinés.

Une fois le couple processus de codage - processus de décodage sélectionné, le processeur 4 procède à l'étape E6 à la configuration de l'unité de traitement parallélisé 6 afin que l'unité de traitement parallélisé 6 puisse mettre en œuvre le processus de codage sélectionné.

Cette étape E6 comprend en particulier l'instanciation, au sein de l'unité de traitement parallélisé 6, du réseau de neurones artificiels de codage 8 utilisé par le processus de codage sélectionné.

Cette instanciation peut notamment comprendre les étapes suivantes :
- réservation, au sein de l'unité de traitement parallélisé 6, de l'espace mémoire nécessaire à la mise en œuvre du réseau de neurones artificiels de codage ; et/ou
- programmation de l'unité de traitement parallélisé 6 avec les poids W et les fonctions d'activation définissant le réseau de neurones artificiels de codage 8 ; et/ou
- chargement d'une partie au moins des données de contenu B sur une mémoire locale de l'unité de traitement parallélisé 6.

Le procédé de la figure 2 comprend alors une étape E8 de mise en œuvre du processus de codage, c'est-à-dire ici d'application des données de contenu B en entrée du réseau de neurones artificiels de codage 8 (ou autrement dit d'activation du réseau de neurones artificiels de codage 8 en prenant en entrée les données de contenu B).

L'étape E8 permet ainsi de produire (ici en sortie du réseau de neurones artificiels de codage 8) les données compressées C.

Les étapes qui suivent visent le codage (c'est-à-dire la préparation) du flux de données contenant notamment les données compressées C et destiné au dispositif électronique de décodage (par exemple le dispositif électronique de décodage 10 décrit ci-dessous en référence à la figure 7).

Le procédé comprend ainsi notamment une étape E10 de codage d'une première partie Fc d'en-tête qui comprend des données caractéristiques du format de représentation du contenu audio ou vidéo (ici par exemple des données liées au format de la séquence vidéo en cours de codage).

Ces données formant la première partie Fc d'en-tête indiquent par exemple les dimensions (en pixels) des images, la fréquence d'image, la profondeur en bits des informations de luminance et la profondeur en bits des informations de chrominance. Ces données sont par exemple construites sur la base des données de format P susmentionnées (après un reformatage éventuel).

Le procédé de la figure 2 se poursuit alors par une étape E12 de détermination de la disponibilité du réseau de neurones artificiels de décodage (utilisé par le processus de décodage sélectionné à l'étape E4) pour le dispositif électronique de décodage susceptible de décoder le flux de données (par exemple le dispositif électronique de décodage 10 décrit ci-dessous en référence à la figure 7).

Cette détermination peut être réalisée sur la base de la liste reçue à l'étape E2 : le processeur 4 détermine dans ce cas si le réseau de neurones artificiels de décodage utilisé par le processus de décodage sélectionné à l'étape E4 fait partie de la liste reçue à l'étape E2. (Naturellement, dans les modes de réalisation où le couple processus de codage - processus de décodage est systématiquement choisi pour correspondre à un réseau de neurones artificiels de décodage disponible pour le dispositif électronique de décodage, l'étape E12 peut être omise et le procédé se poursuit alors à l'étape E14.)

Selon une possibilité de réalisation, en l'absence d'information sur la disponibilité du réseau de neurones artificiels de décodage pour le dispositif électronique de décodage, le procédé se poursuit à l'étape E16 (afin que des données descriptives du réseau de neurones artificiels de décodage soient transmises au dispositif électronique de décodage comme expliqué ci-dessous).

Si le processeur 4 détermine à l'étape E12 que le réseau de neurones artificiels de décodage est disponible pour le dispositif électronique de décodage (flèche P), le procédé se poursuit à l'étape E14 décrite plus bas.

Si le processeur 4 détermine à l'étape E12 que le réseau de neurones artificiels de décodage n'est pas disponible pour le dispositif électronique de décodage (flèche N), le procédé se poursuit à l'étape E16 décrite plus bas.

En variante, le choix de l'étape E14 ou de l'étape E16 en tant qu'étape postérieure à l'étape E12 pourrait être réalisé sur un autre critère, par exemple en fonction d'un indicateur dédié mémorisé au sein du dispositif électronique de codage 2 (et éventuellement réglable par l'utilisateur via une interface utilisateur du dispositif électronique de codage 2) ou en fonction d'un choix de l'utilisateur (obtenu par exemple via une interface utilisateur du dispositif électronique de codage 2).

Le processeur 4 procède à l'étape E14 au codage d'une seconde partie d'en-tête comprenant un indicateur IND et d'une troisième partie d'en-tête comprenant ici un identifiant Inn du réseau de neurones artificiels de décodage.

L'indicateur IND codé dans le flux de données à l'étape E14 indique que le réseau de neurones artificiels de décodage fait partie d'un ensemble prédéterminé de réseaux de neurones artificiels, ici l'ensemble des réseaux de neurones artificiels disponibles (ou accessibles) pour le dispositif électronique de décodage (c'est-à-dire par exemple l'ensemble des réseaux de neurones artificiels de la liste reçue à l'étape E2).

L'identifiant Inn du réseau de neurones artificiels de décodage est un identifiant définissant par convention (partagée notamment par le dispositif électronique de codage et le dispositif électronique de décodage) ce réseau de neurones artificiels de décodage, par exemple au sein de l'ensemble prédéterminé susmentionné.

Le processeur 4 procède à l'étape E16 au codage d'une seconde partie d'en-tête comprenant un indicateur IND' et d'une troisième partie d'en-tête comprenant ici des données descriptives Rc du réseau de neurones artificiels de décodage.

L'indicateur IND' codé dans le flux de données à l'étape E16 indique que le réseau de neurones artificiels de décodage est codé dans le flux de données, c'est-à-dire représenté au moyen des données descriptives Rc précitées.

Le réseau de neurones artificiels de décodage est par exemple codé (c'est-à-dire représenté) par les données descriptives (ou données de codage du réseau de neurones artificiels de décodage) Rc conformément à une norme telle que la norme MPEG-7 partie 17 ou à un format tel que le format JSON.

On pourra se référer à ce sujet à l'article *"*DeepCABAC: Context-adaptive binary arithmetic coding for deep neural network compression", de S. Wiedemann et al., in Proceedings of the 36th International Conference on Machine Learning, Long Beach, California, PMLR 97, 2019, ou à l'article *"*Compact and Computationally Efficient Representation of Deep Neural Networks", de S. Wiedemann et al., in IEEE Transactions on Neural Networks and Learning Systems (Vol. 31 , Iss. 3), mars 2020.

Après l'étape E14 comme après l'étape E16, le procédé de la figure 2 se poursuit par une étape E18 de détermination de la possibilité pour le dispositif électronique de décodage de mettre en œuvre le processus de décodage utilisant le réseau de neurones artificiels de décodage.

Le processeur 4 détermine par exemple cette possibilité en déterminant (éventuellement au moyen d'échanges préalables entre le dispositif électronique de codage et le dispositif électronique de décodage) si le dispositif électronique de décodage comprend un module adapté à mettre en œuvre ce processus de décodage ou un logiciel adapté à la mise en œuvre de ce processus de décodage par le dispositif électronique de décodage lorsque ce logiciel est exécuté par un processeur du dispositif électronique de décodage.

Si le processeur 4 détermine qu'il est possible pour le dispositif électronique de décodage de mettre en œuvre le processus de décodage, le procédé se poursuit à l'étape E22 décrite plus bas.

Si le processeur 4 détermine qu'il n'est pas possible pour le dispositif électronique de décodage de mettre en œuvre le processus de décodage, le procédé effectue l'étape E20 décrite ci-dessous (avant de passer à l'étape E22).

En variante, le choix d'effectuer ou non l'étape E20 (avant d'effectuer l'étape E22) pourrait être réalisé sur un autre critère, par exemple en fonction d'un indicateur dédié mémorisé au sein du dispositif électronique de codage 2 (et éventuellement réglable par l'utilisateur via une interface utilisateur du dispositif électronique de codage 2) ou en fonction d'un choix de l'utilisateur (obtenu par exemple via une interface utilisateur du dispositif électronique de codage 2).

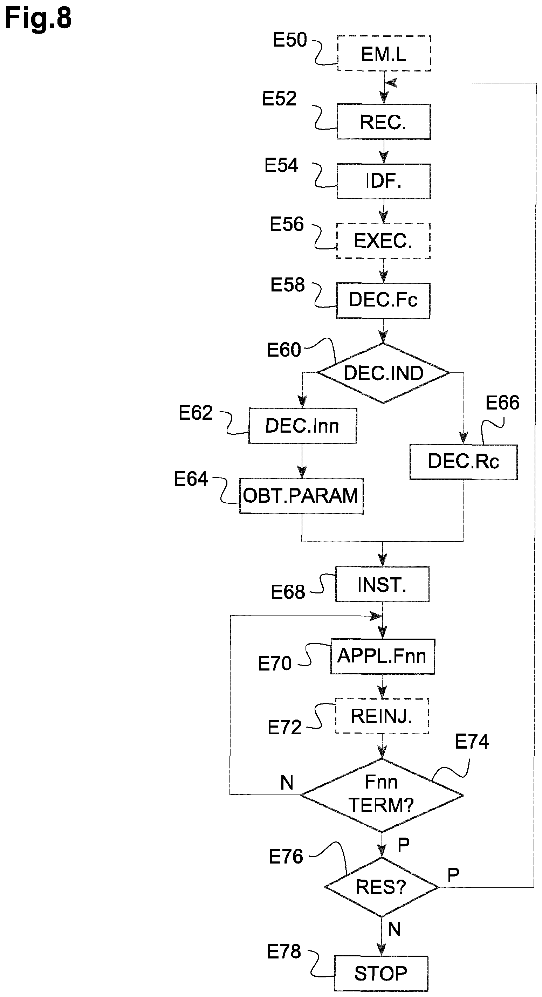

Le processeur 4 code dans le flux de données à l'étape E20 une quatrième partie d'en-tête contenant un programme d'ordinateur Exe (ou code) exécutable par un processeur du dispositif électronique de décodage. (L'utilisation du programme d'ordinateur Exe au sein du dispositif électronique de décodage est décrite ci-dessous en référence à la figure 8.)

Afin d'être adapté à une exécution au sein du dispositif électronique de décodage, le programme d'ordinateur est par exemple choisi au sein d'une bibliothèque en fonction d'informations relatives à la configuration matérielle du dispositif électronique de décodage (informations reçues par exemple au cours d'échanges préalables entre le dispositif électronique de codage 2 et le dispositif électronique de décodage).

Le processeur 4 procède ensuite à une étape E22 de codage d'un flux compressé Fnn sur la base des données compressées C obtenues à l'étape E8.

On remarque à ce sujet que, dans la description qui précède, l'étape E8 a été décrite avant les étapes de codage de l'en-tête Fet (étapes E10 à E20). L'étape E8 pourrait toutefois en pratique être réalisée juste avant l'étape E22.

En particulier, lorsque l'étape E8 permet le traitement d'une partie seulement du contenu audio ou vidéo à compresser (par exemple lorsque l'étape E8 effectue le traitement d'un bloc, ou d'une composante, ou d'une image d'une séquence vidéo à compresser), il est possible de répéter la mise en œuvre des étapes E8 (pour obtenir des données compressées relatives aux parties successives du contenu) et E22 (pour coder dans le flux de données les données compressés obtenues).

Le processeur 4 peut ainsi construire à l'étape E24 le flux de données complet comprenant l'en-tête Fet et le flux compressé Fnn.

Le flux de données complet est construit de sorte que l'en-tête Fet et le flux compressé Fnn soient identifiables individuellement.

Selon une possibilité de réalisation, l'en-tête Fet contient un indicateur de début du flux compressé Fnn dans le flux de données complet. Cet indicateur est par exemple la localisation, en bits, du début du flux compressé Fnn à partir du début du flux de donnée complet. (Autrement dit, l'en-tête a dans ce cas une longueur fixe prédéterminée.)

D'autres moyens d'identification de l'en-tête Fet et du flux compressé Fnn sont envisageables en variante, comme par exemple un marqueur (c'est-à-dire une combinaison de bits utilisée pour indiquer le début du flux compressé Fnn et dont l'usage est interdit dans le reste du flux de données, ou au moins dans l'en-tête Fet).

On a représenté sur les figures 3 à 6 des exemples de flux de données complet qu'il est possible d'obtenir par le procédé de la figure 2.

Comme expliqué ci-dessus, ces flux de données comprennent un en-tête Fet et un flux compressé Fnn.

Dans le cas de la figure 3 (qui correspond à la situation où l'étape E14 a été mise en œuvre et où l'étape E20 n'a pas été mise en œuvre), l'en-tête comprend :
- une première partie Fc comprenant les données caractéristiques du format de représentation du contenu audio ou vidéo ;
- une seconde partie comprenant l'indicateur IND indiquant que le réseau de neurones artificiels de décodage fait partie d'un ensemble prédéterminé de réseaux de neurones artificiels ; et
- une troisième partie comprenant l'identifiant Inn du réseau de neurones artificiels de décodage.

Dans le cas de la figure 4 (qui correspond à la situation où l'étape E16 a été mise en œuvre et où l'étape E20 n'a pas été mise en œuvre), l'en-tête comprend :
- une première partie Fc comprenant les données caractéristiques du format de représentation du contenu audio ou vidéo ;
- une seconde partie comprenant l'indicateur IND' indiquant que le réseau de neurones artificiels de décodage est codé dans le flux de données ; et
- une troisième partie comprenant les données Rc descriptives (ici les données de codage) du réseau de neurones artificiels de décodage.

Dans le cas de la figure 5 (qui correspond à la situation où les étapes E14 et E20 ont été mises en œuvre), l'en-tête comprend :
- une première partie Fc comprenant les données caractéristiques du format de représentation du contenu audio ou vidéo ;
- une seconde partie comprenant l'indicateur IND indiquant que le réseau de neurones artificiels de décodage fait partie d'un ensemble prédéterminé de réseaux de neurones artificiels ;
- une troisième partie comprenant l'identifiant Inn du réseau de neurones artificiels de décodage ; et
- une quatrième partie comprenant le programme d'ordinateur Exe.

Dans le cas de la figure 6 (qui correspond à la situation où les étapes E16 et E20 ont été mises en œuvre), l'en-tête comprend :
- une première partie Fc comprenant les données caractéristiques du format de représentation du contenu audio ou vidéo ;
- une seconde partie comprenant l'indicateur IND' indiquant que le réseau de neurones artificiels de décodage est codé dans le flux de données ; et
- une troisième partie comprenant les données Rc descriptives (ici les données de codage) du réseau de neurones artificiels de décodage ; et
- une quatrième partie comprenant le programme d'ordinateur Exe.

Le flux de données construit à l'étape E24 peut être encapsulé dans des formats de transmission connus en soi, comme le format *"Packet-Transport System"* ou le format *"Byte-Stream ".*

Dans le cas du format *"Packet-Transport System"* (comme proposé par exemple par le protocole RTP), les données sont codées par paquets identifiables et transmis sur un réseau de communication. Le réseau peut aisément identifier les frontières des données (images, groupes d'images et ici en-tête Fet et flux compressé Fnn), à l'aide des informations d'identification de paquets fournies par la couche réseau.

Dans le format *"Byte-Stream",* il n'y a pas spécifiquement de paquets et la construction de l'étape E24 doit permettre d'identifier les frontières des données pertinentes (telles que frontières entre parties du flux correspondant à chaque image, et ici entre en-tête Fet et flux compressé Fnn) à l'aide de moyens supplémentaires, tels que l'utilisation d'unités de couche d'abstraction de réseau (ou unités NAL pour *"Network Abstraction Layer"),* où des combinaisons uniques de bits (telles que 0x00000001) permettent d'identifier les frontières entre données).

Le flux de données complet construit à l'étape E24 peut alors être émis à l'étape E26 à destination du dispositif électronique de décodage 26 (par des moyens de communication non représenté et/ou à travers au moins un réseau de communication), ou mémorisé au sein du dispositif électronique de codage 2 (pour émission ultérieure ou, en variante, décodage ultérieur, par exemple au sein même du dispositif électronique de codage, qui est dans ce cas conçu pour mettre en œuvre en outre le procédé de décodage décrit ci-dessous en référence à la figure 8).

Lorsque le contenu audio ou vidéo comprend une pluralité de parties (par exemple une pluralité de groupes d'images lorsque le contenu est une séquence vidéo), le procédé des étapes E4 à E24 peut éventuellement être mis en œuvre pour chacune des parties du contenu (par exemple pour chaque groupe d'images) de façon à obtenir un flux de données tel que représenté sur l'une des figures 3 à 6 pour chaque partie de contenu (par exemple pour chaque groupe d'image). Ainsi, le flux compressé Fnn relatif à chaque groupe d'images pourra être décodé en utilisant un réseau de neurones artificiels propre au groupe d'images concerné et éventuellement différent des réseaux de neurones artificiels utilisés pour les autres groupes d'image, comme décrit dans la suite. Les réseaux de neurones artificiels pourront éventuellement avoir des structures identiques (et ne différer que par les poids et/ou les fonctions d'activation qui définissent un réseau de neurones artificiels particulier).

La figure 7 représente un dispositif électronique de décodage 10 utilisant au moins un réseau de neurones artificiels 18.

Ce dispositif électronique de décodage 10 comprend une unité de réception 11, un processeur 14 (par exemple un microprocesseur) et une unité de traitement parallélisé 16, par exemple une unité de traitement graphique (ou GPU pour *"Graphical Processing Unit*") ou une unité de traitement de tenseur (ou TPU pour *"Tensor Processing Unit*").

L'unité de réception 11 est par exemple un circuit de communication (tel qu'un circuit de communication radiofréquence) et permet de recevoir des données (et notamment ici le flux de données codées) d'un dispositif électronique extérieur, tel que le dispositif électronique de codage 2, et de communiquer ces données au processeur 14 (auquel l'unité de réception 11 est par exemple relié par un bus).

Le dispositif électronique de décodage 10 comprend également une unité de mémorisation 12, par exemple une mémoire (éventuellement une mémoire non-volatile réinscriptible) ou un disque dur. Bien que l'unité de mémorisation 12 soit représentée en figure 7 comme un élément distinct du processeur 14, l'unité de mémorisation 12 pourrait en variante être intégrée au (c'est-à-dire comprise dans le) processeur 14.

Le processeur 14 est dans ce cas conçu pour exécuter successivement une pluralité d'instructions d'un programme d'ordinateur mémorisé par exemple dans l'unité de mémorisation 12.

L'unité de traitement parallélisé 16 est conçue pour mettre en œuvre le réseau de neurones artificiels 18 après avoir été configurée par le processeur 14. Pour ce faire, l'unité de traitement parallélisé 16 est conçue pour effectuer en parallèle à un instant donné une pluralité d'opérations du même type.

Comme schématiquement représenté en figure 7, le processeur 14 reçoit un flux de données (par exemple via des moyens de communication non représentés du dispositif électronique de décodage 10) comprenant un premier ensemble de données, ici l'en-tête Fet, et un second ensemble de données représentatives du contenu audio ou vidéo, ici le flux compressé Fnn.

Comme expliqué dans la suite, le réseau de neurones artificiels 18 est utilisé dans le cadre d'un traitement du second ensemble de données (c'est-à-dire ici des données compressées Fnn) pour obtenir un contenu audio ou vidéo correspondant au contenu audio ou vidéo initial B.

L'unité de mémorisation 12 peut mémoriser une pluralité de jeux de paramètres, chaque jeu de paramètres définissant un réseau de neurones artificiels de décodage. Comme expliqué dans la suite, le processeur 14 peut dans ce cas configurer l'unité de traitement parallélisé 16 au moyen d'un jeu de paramètres particulier parmi ces jeux de paramètres de sorte que l'unité de traitement parallélisé 16 puisse alors mettre en œuvre le réseau de neurones artificiels défini par ce jeu de paramètres particulier.

L'unité de mémorisation 12 peut notamment mémoriser un premier jeu de paramètres définissant un premier réseau de neurones artificiels formant décodeur à accès aléatoire et/ou un second jeu de paramètres définissant un second réseau de neurones artificiels formant un décodeur à faible latence.

Le dispositif électronique de décodage 10 détient dans ce cas à l'avance des possibilités de décodage tant pour des situations où l'on souhaite obtenir un accès aléatoire au contenu que pour des situations où l'on souhaite afficher sans retard le contenu.

On décrit à présent en référence à la figure 8 un procédé de décodage mis en œuvre au sein du dispositif électronique de décodage 10 et utilisant le réseau de neurones artificiels 18 mis en œuvre par l'unité de traitement parallélisé 16.

Ce procédé peut débuter par une étape optionnelle d'émission, par le dispositif électronique de décodage 10 et à destination d'un dispositif de commande de l'émission du flux de données à décoder, d'une liste L de réseaux de neurones artificiels accessibles par le dispositif électronique de décodage 10. Le dispositif de commande de l'émission du flux de données peut être par exemple le dispositif électronique de codage 2. (Le dispositif électronique de codage 2 reçoit dans ce cas cette liste L à l'étape E2 décrite plus haut en référence à la figure 2.) En variante, le dispositif de commande de l'émission du flux de données pourrait être un serveur dédié, fonctionnant en coopération avec le dispositif électronique de codage 2.

Les réseaux de neurones artificiels accessibles par le dispositif électronique de décodage 10 sont les réseaux de neurones artificiels pour lesquels le dispositif électronique de décodage 10 mémorise un jeu de paramètres définissant le réseau de neurones artificiels concerné (comme indiqué ci-dessus) ou peut avoir accès à ce jeu de paramètres par connexion à un équipement électronique distant tel qu'un serveur (comme expliqué ci-dessous).

Le procédé de la figure 8 comprend une étape E52 de réception (par le dispositif électronique de décodage 10, et précisément ici par l'unité de réception 11) du flux de données comprenant le premier ensemble de données, à savoir l'en-tête Fet ; et le second ensemble de données, à savoir le flux compressé Fnn. L'unité de réception 11 transmet le flux de données reçu au processeur 14.

Le processeur 14 procède alors à une étape E54 d'identification du premier ensemble de données (en-tête Fet) et du second ensemble de données (flux compressé Fnn) au sein du flux de données reçu, par exemple au moyen de l'indicateur de début de flux compressé (déjà mentionné lors de la description de l'étape E24).

Le processeur 14 peut également identifier à l'étape E54 les différentes parties du premier ensemble de données (en-tête), à savoir ici au sein de l'en-tête Fet : la première partie Fc (comprenant des données représentatives de caractéristiques du format du contenu codé par le flux de données), la seconde partie (indicateur IND ou IND'), la troisième partie (identifiant Inn ou données de codage Rc) et éventuellement la quatrième partie (programme d'ordinateur Exe), comme illustré sur les figures 3 à 6 décrites plus haut.

Dans les cas où des instructions exécutables (telles que les instructions du programme d'ordinateur Exe) sont identifiées (i.e. détectées) au sein des premières données à l'étape E54, le processeur 14 peut lancer à l'étape E56 l'exécution de ces instructions exécutables afin de mettre en œuvre certaines au moins des étapes (décrites ci-dessous) de traitement des données du premier ensemble de données. Ces instructions peuvent être exécutées par le processeur 14 ou, en variante, par une machine virtuelle instanciée au sein du dispositif électronique de décodage 10.

Le procédé de la figure 7 se poursuit par une étape E58 de décodage des données Fc caractéristiques du format de représentation du contenu audio ou vidéo de manière à obtenir des caractéristiques de ce format. Dans le cas d'un contenu vidéo par exemple, le décodage des données Fc permet d'obtenir les dimensions (en pixels) des images et/ou la fréquence d'image et/ou la profondeur en bits des informations de luminance et/ou la profondeur en bits des informations de chrominance.

Le processeur 14 procède alors (dans certains modes de réalisation, du fait de l'exécution d'instructions identifiées au sein du premier ensemble de données à l'étape E54, comme déjà indiqué) à une étape E60 de décodage de l'indicateur IND, IND' contenu ici dans la seconde partie de l'en-tête Fet.

Si le décodage de l'indicateur IND, IND' présent dans le flux de données reçues indique que le réseau de neurones artificiels 18 à utiliser pour le décodage fait partie d'un ensemble prédéterminé de réseaux de neurones artificiels (c'est-à-dire si l'indicateur présent dans le premier ensemble de données est l'indicateur IND indiquant que le réseau de neurones artificiels de décodage 18 fait partie d'un ensemble prédéterminé de réseaux de neurones artificiels), le procédé se poursuit à l'étape E62 décrite plus bas.

Si le décodage de l'indicateur IND, IND' présent dans le flux de données reçues indique que le réseau de neurones artificiels 18 à utiliser pour le décodage est codé dans le flux de données (c'est-à-dire si l'indicateur présent dans le premier ensemble de données est l'indicateur IND' indiquant que le réseau de neurones artificiels de décodage 18 est codé dans le flux de données), le procédé se poursuit à l'étape E66 décrite plus bas.

À l'étape E62, le processeur 14 procède (dans certains modes de réalisation, du fait de l'exécution d'instructions identifiées au sein du premier ensemble de données à l'étape E54, comme déjà indiqué) au décodage de l'identifiant Inn (contenu ici dans la troisième partie de l'en-tête Fet). Comme déjà indiqué, cet identifiant Inn est un identifiant désignant le réseau de neurones artificiels de décodage 18, par exemple au sein de l'ensemble prédéterminé de réseaux de neurones artificiels susmentionné.

Le processeur 14 peut alors procéder (dans certains modes de réalisation, du fait de l'exécution d'instructions identifiées au sein du premier ensemble de données à l'étape E54, comme déjà indiqué) à l'étape E64 à la lecture, par exemple dans l'unité de mémorisation 12, d'un jeu de paramètres associé à l'identifiant décodé Inn (ce jeu de paramètres définissant le réseau de neurones artificiels identifié par l'identifiant décodé Inn).

Selon une possibilité de réalisation, on peut prévoir que le processeur 14 génère un message d'erreur en cas d'absence (ici au sein de l'unité de mémorisation 12) de données (notamment de paramètres) relatives à ce réseau de neurones artificiels identifié par l'identifiant décodé Inn.

En variante (ou dans le cas où aucun jeu de paramètres n'est mémorisé dans l'unité de mémorisation 12 pour le réseau de neurones artificiels identifié par l'identifiant décodé Inn), le dispositif électronique de décodage 10 peut émettre (dans certains modes de réalisation, du fait de l'exécution d'instructions identifiées au sein du premier ensemble de données à l'étape E54, comme déjà indiqué) une requête d'un jeu de paramètres à destination d'un serveur distant (cette requête incluant par exemple l'identifiant décodé Inn) et recevoir en réponse à l'étape E64 le jeu de paramètres définissant le réseau de neurones artificiels identifié par l'identifiant décodé Inn.

Le procédé se poursuit ensuite à l'étape E68 décrite plus bas.

À l'étape E66, le processeur 14 procède (dans certains modes de réalisation, du fait de l'exécution d'instructions identifiées au sein du premier ensemble de données à l'étape E54, comme déjà indiqué) au décodage des données descriptives Rc du réseau de neurones artificiels 18 (contenues ici dans la troisième partie de l'en-tête Fet).

Comme déjà indiqué, ces données descriptives (ou données de codage) Rc sont par exemple codées conformément à une norme telle que la norme MPEG-7 partie 17 ou à un format tel que le format JSON.

Le décodage des données descriptives Rc permet d'obtenir les paramètres définissant le réseau de neurones artificiels à utiliser pour le décodage des données du second ensemble de données (c'est-à-dire ici des données du flux compressé Fnn).

Le procédé se poursuit dans ce cas aussi à l'étape E68 décrite à présent.

Le processeur 14 procède alors (dans certains modes de réalisation, du fait de l'exécution d'instructions identifiées au sein du premier ensemble de données à l'étape E54, comme déjà indiqué) à l'étape E68 à la configuration de l'unité de traitement parallélisé 16 au moyen des paramètres définissant le réseau de neurones artificiels de décodage 18 (paramètres obtenus à l'étape E64 ou à l'étape E66) afin que l'unité de traitement parallélisé 16 puisse mettre en œuvre le réseau de neurones artificiels de décodage 18.

Cette étape de configuration E68 comprend notamment l'instanciation du réseau de neurones artificiels de décodage 18 au sein de l'unité de traitement parallélisé 16, ici en utilisant les paramètres obtenus à l'étape E64 ou à l'étape E66.

Cette instanciation peut notamment comprendre les étapes suivantes :
- réservation, au sein de l'unité de traitement parallélisé 16, de l'espace mémoire nécessaire à la mise en œuvre du réseau de neurones artificiels de décodage 18 ; et/ou
- programmation de l'unité de traitement parallélisé 16 avec les paramètres (incluant par exemple des poids W et des fonctions d'activation) définissant le réseau de neurones artificiels de décodage 18 (paramètres obtenus à l'étape E64 ou à l'étape E66) ; et/ou
- chargement d'une partie au moins des données du second ensemble de données (c'est-à-dire d'une partie au moins des données du flux compressé Fnn) sur une mémoire locale de l'unité de traitement parallélisé 16.

Comme cela ressort de la description des étapes E58 à E68 qui précède, les données du premier ensemble de données Fet sont ainsi traitées par le processeur 14.

Le processeur 14 peut alors appliquer (i.e. présenter) à l'étape E70 les données du second ensemble de données (ici des données du flux compressé Fnn) au réseau de neurones artificiels 18 mis en œuvre par l'unité de traitement parallélisé 16 afin que ces données soient traitées par un processus de décodage utilisant en partie au moins le réseau de neurones artificiels 18.

Dans l'exemple décrit ici, le réseau de neurones artificiels 18 reçoit en entrée les données du second ensemble de données Fnn et produit en sortie une représentation l du contenu codé adaptée à une reproduction sur un dispositif de reproduction audio ou vidéo. Autrement dit, certaines au moins des données du second ensemble de données Fnn sont appliquées sur la couche d'entrée du réseau de neurones artificiels 18 et la couche de sortie du réseau de neurones artificiels 18 produit la représentation I du contenu codé susmentionnée. Dans le cas d'un contenu vidéo (comprenant une image ou une séquence d'images), le réseau de neurones artificiels 18 produit ainsi en sortie (c'est-à-dire au niveau de sa couche de sortie) au moins une représentation matricielle I d'une image.

Dans certains modes de réalisation, pour le traitement de certaines données du flux compressé Fc (correspondant par exemple à un bloc ou une image), le réseau de neurones artificiels 18 peut recevoir en entrée certaines au moins des données produites en sortie du réseau de neurones artificiels 18 lors du traitement de données antérieures (correspondant par exemple au bloc précédent ou à l'image précédente) dans le flux compressé Fc. On procède dans ce cas à une étape E72 de réinjection de données produites en sortie du réseau de neurones artificiels 18 vers l'entrée du réseau de neurones artificiels 18.

Par ailleurs, selon d'autres possibilité de réalisation, le processus de décodage pourrait utiliser une pluralité de réseaux de neurones artificiels, comme déjà mentionné plus haut à propos du traitement des données de contenu B.

Les données du second ensemble (ici certaines données au moins du flux compressé Fnn) ont ainsi été traitées par un processus dépendant d'une partie des données du premier ensemble (processus dépendant ici de l'identifiant Inn ou des données de codage Rc) et utilisant le réseau de neurones artificiels 18 mis en œuvre par l'unité de traitement parallélisé 16.

Le processeur 14 détermine alors à l'étape E74 si le traitement du flux compressé Fnn au moyen du réseau de neurones artificiels 18 est terminé.

En cas de détermination négative (N), le procédé boucle à l'étape E70 pour application d'autres données du flux compressé Fnn au réseau de neurones artificiels 18.

En cas de détermination positive (P), le procédé se poursuit à l'étape E76 où le processeur 14 détermine s'il reste des données à traiter dans le flux de données reçu.

En cas de détermination négative (N) à l'étape E76, il est mis fin au procédé à l'étape E78.

En cas de détermination positive (P) à l'étape E76, le procédé boucle à l'étape E52 pour traitement d'une nouvelle partie du flux de données telle que représentée sur l'une des figures 3 à 6.

Comme indiqué plus haut en ce qui concerne la réitération des étapes de codage E4 à E24, cette autre partie du flux de données comprend alors elle aussi un premier ensemble de données et un second ensemble de données représentatives d'un autre contenu audio ou vidéo (par exemple, dans le cas d'un contenu vidéo, un autre groupe d'images pour le format de représentation du contenu utilisé). Un autre réseau de neurones artificiels peut dans ce cas être déterminé sur la base de certaines de ces premières données (identifiant Inn ou données de codage Rc), comme décrit ci-dessus aux étapes E54 à E66, puis l'unité de traitement parallélisé 16 peut être configurée pour mettre en œuvre cet autre réseau de neurones artificiels (conformément à l'étape E68 décrite ci-dessus). Les données du second ensemble de données de cette autre partie du flux de données (relative par exemple à l'autre groupe d'images susmentionné) peuvent ainsi être décodées au moyen de cet autre réseau de neurones artificiels (comme décrit ci-dessus à l'étape E70).

L'autre réseau de neurones artificiels qui vient d'être mentionné peut avoir une structure identique au réseau de neurones artificiels 18 mentionné plus haut, ce qui simplifie l'étape de configuration de l'unité de traitement parallélisé 16 (seuls les poids et/ou les fonctions d'activation définissant le réseau de neurones artificiels courant étant par exemple mis à jour).

## Revendications

1. Procédé de décodage d'un flux de données comprenant un indicateur (IND ; IND') et des données (Fnn) représentatives d'un contenu audio ou vidéo, dans lequel le procédé comprend les étapes suivantes :
- décodage (E60) de l'indicateur (IND ; IND') pour déterminer si un réseau de neurones artificiels (18) à utiliser pour le décodage desdites données représentatives (Fnn) est codé dans le flux de données ou fait partie d'un ensemble prédéterminé de réseaux de neurones artificiels ;
- décodage (E70) desdites données représentatives (Fnn) au moyen du réseau de neurones artificiels (18).

2. Procédé de décodage selon la revendication 1, dans lequel ledit contenu est une première partie d'une séquence vidéo, ladite séquence vidéo comprenant ladite première partie et une seconde partie, dans lequel l'étape de décodage desdites données représentatives produit ladite première partie, et dans lequel le procédé comprend en outre une étape de décodage d'autres données au moyen d'un autre réseau de neurones artificiels pour produire la seconde partie.

3. Procédé de décodage selon la revendication 2, dans lequel l'autre réseau de neurones artificiels présente une structure identique audit réseau de neurones artificiels.

4. Procédé de décodage selon la revendication 2 ou 3, dans lequel la première partie et la seconde partie forment respectivement deux groupes d'images pour le format de représentation du contenu utilisé.

5. Procédé de décodage selon l'une des revendications 1 à 4, comprenant une étape (E50) de transmission d'une liste (L) de réseaux de neurones artificiels à destination d'un dispositif de commande de l'émission du flux de données.

6. Procédé de décodage selon l'une des revendications 1 à 5, comprenant, s'il est déterminé par décodage de l'indicateur (IND) que le réseau de neurones artificiels (18) fait partie dudit ensemble prédéterminé, le décodage (E62) d'un identifiant (Inn) du réseau de neurones (18).

7. Procédé de décodage selon la revendication 6, comprenant la lecture, dans une unité de mémorisation (12), de paramètres du réseau de neurones artificiels (18) identifié par l'identifiant décodé (Inn).

8. Procédé de décodage selon la revendication 7, dans lequel l'unité de mémorisation (12) mémorise un premier jeu de paramètres représentatifs d'un premier réseau de neurones artificiels formant un décodeur à accès aléatoire et un second jeu de paramètres représentatifs d'un second réseau de neurones artificiels formant un décodeur à faible latence.

9. Procédé de décodage selon la revendication 6, comprenant une étape de génération d'un message d'erreur en cas d'absence de données relatives au réseau de neurones artificiels identifié par l'identifiant décodé.

10. Procédé de décodage selon la revendication 6, comprenant la réception, en provenance d'un serveur distant, de paramètres du réseau de neurones artificiels (18) identifié par l'identifiant décodé (Inn).

11. Procédé de décodage selon l'une des revendications 1 à 5, comprenant, s'il est déterminé par décodage de l'indicateur (IND') que le réseau de neurones artificiels (18) est codé dans le flux de données, le décodage (E66) de données de codage (Rc) du réseau de neurones artificiels (18) comprises dans le flux de données afin d'obtenir des paramètres du réseau de neurones artificiels (18).

12. Dispositif de décodage comprenant :
- une unité de réception (11) d'un flux de données comprenant un indicateur (IND ; IND') et des données (Fnn) représentatives d'un contenu audio ou vidéo ;
- un ensemble de décodage (14, 16) conçu pour déterminer, par décodage de l'indicateur (IND; IND'), si un réseau de neurones artificiels (18) à utiliser pour le décodage desdites données représentatives (Fnn) fait partie d'un ensemble prédéterminé de réseaux de neurones artificiels ou est codé dans le flux de données, et pour décoder lesdites données représentatives au moyen du réseau de neurones artificiels (18).

13. Flux de données comprenant des données (Fnn) représentatives d'un contenu audio ou vidéo, et un indicateur (IND ; IND')) indiquant si un réseau de neurones artificiels (18) à utiliser pour le décodage desdites données représentatives (Fnn) est codé dans le flux de données ou fait partie d'un ensemble prédéterminé de réseaux de neurones artificiels.

## Patentansprüche

1. Verfahren zum Decodieren eines Datenstroms, der einen Indikator (IND; IND') und für einen Audio- oder Videoinhalt repräsentative Daten (Fnn) umfasst, wobei das Verfahren die folgenden Schritte umfasst:
- Decodieren (E60) des Indikators (IND; IND'), um zu ermitteln, ob ein künstliches neuronales Netz (18), das zum Decodieren der repräsentativen Daten (Fnn) zu verwenden ist, in dem Datenstrom codiert ist oder zu einer vorbestimmten Menge künstlicher neuronaler Netze gehört;
- Decodieren (E70) der repräsentativen Daten (Fnn) mittels des künstlichen neuronalen Netzes (18).

2. Verfahren zum Decodieren nach Anspruch 1, wobei der Inhalt ein erster Teil einer Videosequenz ist, wobei die Videosequenz den ersten Teil und einen zweiten Teil umfasst, wobei der Schritt des Decodierens der repräsentativen Daten den ersten Teil erzeugt, und wobei das Verfahren ferner einen Schritt des Decodierens weiterer Daten mittels eines weiteren künstlichen neuronalen Netzes umfasst, um den zweiten Teil zu erzeugen.

3. Verfahren zum Decodieren nach Anspruch 2, wobei das weitere künstliche neuronale Netz eine Struktur aufweist, die identisch mit dem künstlichen neuronalen Netz ist.

4. Verfahren zum Decodieren nach Anspruch 2 oder 3, wobei der erste Teil und der zweite Teil jeweils zwei Gruppen von Bildern für das verwendete Darstellungsformat des Inhalts bilden.

5. Verfahren zum Decodieren nach einem der Ansprüche 1 bis 4, umfassend einen Schritt (E50) des Übertragens einer Liste (L) mit künstlichen neuronalen Netzen an eine Vorrichtung zur Steuerung des Sendens des Datenstroms.

6. Verfahren zum Decodieren nach einem der Ansprüche 1 bis 5, umfassend, wenn durch Decodieren des Indikators (IND) ermittelt wird, dass das künstlichen neuronale Netz (18) zu der vorbestimmten Menge gehört, das Decodieren (E62) einer Kennung (Inn) des neuronalen Netzes (18).

7. Verfahren zum Decodieren nach Anspruch 6, umfassend das Lesen, in einer Speichereinheit (12), von Parametern des künstlichen neuronalen Netzes (18), das durch die decodierte Kennung (Inn) identifiziert wird.

8. Verfahren zum Decodieren nach Anspruch 7, wobei die Speichereinheit (12) einen ersten Satz Parameter speichert, die für ein erstes künstliches neuronales Netz repräsentativ sind, das einen Decoder mit wahlfreiem Zugriff bildet, und einen zweiten Satz Parameter, die für ein zweites künstliches neuronales Netz repräsentativ sind, das einen Decoder mit geringer Latenz bildet.

9. Verfahren zum Decodieren nach Anspruch 6, umfassend einen Schritt des Erzeugens einer Fehlermeldung im Fall des Fehlens von Daten bezüglich des durch die decodierte Kennung identifizierten künstlichen neuronalen Netzes.

10. Verfahren zum Decodieren nach Anspruch 6, umfassend das Empfangen, von einem entfernten Server, von Parametern des durch die decodierte Kennung (Inn) identifizierten künstlichen neuronalen Netzes (18).

11. Verfahren zum Decodieren nach einem der Ansprüche 1 bis 5, umfassend, wenn durch Decodieren des Indikators (IND') ermittelt wird, dass das künstliche neuronale Netz (18) in dem Datenstrom codiert ist, das Decodieren (E66) von Codierungsdaten (Rc) des künstlichen neuronalen Netzes (18), die in dem Datenstrom enthalten sind, um Parameter des künstlichen neuronalen Netzes (18) zu erhalten.

12. Decodiervorrichtung, umfassend:
- eine Empfangseinheit (11) für einen Datenstrom, der einen Indikator (IND; IND') und für einen Audio- oder Videoinhalt repräsentative Daten (Fnn) umfasst;
- eine Decodieranordnung (14, 16), die dazu ausgelegt ist, durch Decodieren des Indikators (IND; IND') zu ermitteln, ob ein künstliches neuronales Netz (18), das zum Decodieren der repräsentativen Daten (Fnn) zu verwenden ist, zu einer vorbestimmten Menge von künstlichen neuronalen Netzen gehört oder in dem Datenstrom codiert ist, und die repräsentativen Daten mittels des künstlichen neuronalen Netzes (18) zu decodieren.

13. Datenstrom, umfassend für einen Audio- oder Videoinhalt repräsentative Daten (Fnn) und einen Indikator (IND; IND'), der angibt, ob ein künstliches neuronales Netz (18), das zum Decodieren der repräsentativen Daten (Fnn) zu verwenden ist, in dem Datenstrom codiert ist oder zu einer vorbestimmten Menge künstlicher neuronaler Netze gehört.

## Claims

1. Method for decoding a data stream comprising an indicator (IND; IND') and data (Fnn) representative of audio or video content, wherein the method comprises the following steps:
- decoding (E60) the indicator (IND; IND') in order to determine whether an artificial neural network (18) to be used to decode said representative data (Fnn) is coded in the data stream or belongs to a predetermined set of artificial neural networks;
- decoding (E70) said representative data (Fnn) using the artificial neural network (18).

2. Decoding method according to Claim 1, wherein said content is a first portion of a video sequence, said video sequence comprising said first portion and a second portion, wherein the step of decoding said representative data produces said first portion, and wherein the method furthermore comprises a step of decoding other data using another artificial neural network in order to produce the second portion.

3. Decoding method according to Claim 2, wherein the other artificial neural network has a structure identical to said artificial neural network.

4. Decoding method according to Claim 2 or 3, wherein the first portion and the second portion respectively form two groups of images for the representation format used for the content.

5. Decoding method according to one of Claims 1 to 4, comprising a step (E50) of transmitting a list (L) of artificial neural networks to a device for controlling the transmission of the data stream.

6. Decoding method according to one of Claims 1 to 5, comprising, if it is determined by decoding the indicator (IND) that the artificial neural network (18) belongs to said predetermined set, decoding (E62) an identifier (Inn) of the neural network (18).

7. Decoding method according to Claim 6, comprising reading, from a storage unit (12), parameters of the artificial neural network (18) identified by the decoded identifier (Inn).

8. Decoding method according to Claim 7, wherein the storage unit (12) stores a first set of parameters representative of a first artificial neural network forming a random-access decoder and a second set of parameters representative of a second artificial neural network forming a low-latency decoder.

9. Decoding method according to Claim 6, comprising a step of generating an error message in the absence of data relating to the artificial neural network identified by the decoded identifier.

10. Decoding method according to Claim 6, comprising receiving, from a remote server, parameters of the artificial neural network (18) identified by the decoded identifier (Inn).

11. Decoding method according to one of Claims 1 to 5, comprising, if it is determined by decoding the indicator (IND') that the artificial neural network (18) is coded in the data stream, decoding (E66) coding data (Rc) coding the artificial neural network (18) contained in the data stream in order to obtain parameters of the artificial neural network (18).

12. Decoding device comprising:
- a reception unit (11) for receiving a data stream comprising an indicator (IND; IND') and data (Fnn) representative of audio or video content;
- a decoding assembly (14, 16) designed to determine, by decoding the indicator (IND; IND'), whether an artificial neural network (18) to be used to decode said representative data (Fnn) belongs to a predetermined set of artificial neural networks or is coded in the data stream, and to decode said representative data using the artificial neural network (18).

13. Data stream comprising data (Fnn) representative of audio or video content, and an indicator (IND; IND') indicating whether an artificial neural network (18) to be used to decode said representative data (Fnn) is coded in the data stream or belongs to a predetermined set of artificial neural networks.
